# EUROPÄISCHE PATENTSCHRIFT

(11) **EP 1 324 959 B1**
(45) Veröffentlichungstag und Bekanntmachung des Hinweises auf die Patenterteilung: **04.08.2004**
(21) Anmeldenummer: 01984590.8
(22) Anmeldetag: 06.09.2001
(51) Int. Cl.: C04B 35/14, C25D 13/02, C30B 15/10, C30B 35/00, C03B 19/06

(54) **ELEKTROPHORETISCH NACHVERDICHTETE SiO2 -FORMKÖRPER, VERFAHREN ZU IHRER HERSTELLUNG UND VERWENDUNG**
ELECTROPHORETICALLY REDENSIFIED SIO2 - MOULDED BODY, METHOD FOR THE PRODUCTION AND USE THEREOF
CORPS FACONNE EN SIO2, POSTCOMPACTE ELECTROPHORETIQUEMENT, PROCEDE DE FABRICATION ET UTILISATION DUDIT CORPS

(30) Priorität: 07.09.2000 DE 10044163
(43) Veröffentlichungstag der Anmeldung: 09.07.2003
(73) Patentinhaber: Wacker-Chemie GmbH, 81737 München (DE)
(72) Erfinder: SCHWERTFEGER, Fritz, D-84453 Mühldorf (DE); WEIS, Johann, D-82054 Sauerlach (DE); CLASEN, Rolf, D-66125 Saarbrücken (DE); TABELLION, Jan, D-66292 Riegelsberg (DE)
(74) Vertreter: Potten, Holger
(86) Internationale Anmeldenummer: PCT/EP2001/010296
(87) Internationale Veröffentlichungsnummer: WO 2002/020424

(56) Entgegenhaltungen:
- EP-A- 0 909 743
- DE-A- 4 440 104
- US-A- 5 989 021
- GAL-OR L ET AL: "Deep electrophoretic penetration and deposition of ceramic particles inside porous substrates. II. Experimental model" J ELECTROCHEM SOC;JOURNAL OF THE ELECTROCHEMICAL SOCIETY APR 1992, Bd. 139, Nr. 4, April 1992 (1992-04), Seiten 1078-1081, XP002189550
- KOONER S ET AL: "Processing of Nextel ? 720/mullite composition composite using electrophoretic deposition" JOURNAL OF THE EUROPEAN CERAMIC SOCIETY, ELSEVIER SCIENCE PUBLISHERS, BARKING, ESSEX, GB, Bd. 20, Nr. 5, Mai 2000 (2000-05), Seiten 631-638, XP004193042 ISSN: 0955-2219
- SACKS MICHAEL D ET AL: "PREPARATION OF SiO2 GLASS FROM MODEL POWDER COMPACTS: III, ENHANCED DENSIFICATION BY SOL INFILTRATION" J AM CERAM SOC APR 1988, Bd. 71, Nr. 4, April 1988 (1988-04), Seiten 245-249, XP002189551

## Beschreibung

Die Erfindung betrifft elektrophoretisch nachverdichtete SiO₂-Formkörper, Verfahren zu ihrer Herstellung sowie ihre Verwendung.

Poröse, amorphe SiO₂-Formkörper werden auf vielen technischen Gebieten benutzt. Als Beispiele seien Filtermaterialien, Wärmedämmmaterialien oder Hitzeschilder genannt.

Ferner können aus amorphen, porösen SiO₂-Formkörpern mittels Sinterung und/oder Schmelzen Quarzgüter aller Art hergestellt werden. Hochreine poröse SiO₂-Formkörper können dabei z. B. als "preform" für Glasfasern oder Lichtleitfasern dienen. Darüber hinaus können auf diesem Wege auch Tiegel für das Ziehen von Siliziumeinkristallen hergestellt werden.

Unabhängig von der Verwendung der porösen Formkörper ist man immer bestrebt, einen möglichst stabilen und endkonturnahen Formkörper herzustellen. Beides wird am einfachsten dadurch gewährleistet, wenn der poröse Formkörper einen möglichst hohen Füllgrad aufweist. Dadurch tritt im Laufe der Herstellung des Formkörpers nur sehr wenig bis überhaupt.kein Schrumpf auf.

Sollen die porösen SiO₂-Formkörper einer anschließenden Wärmebehandlung, z.B. Sinterung, unterzogen werden, um nichtporöse SiO₂-Formkörper zu erhalten, so ist eine möglichst hohe Dichte der Grünkörper mit möglichst kleinen Poren und möglichst enger Porenradienverteilung besonders wünschenswert, weil dadurch ein möglichst endmaß- und endkonturnaher nichtporöser Formkörper gefertigt werden kann. Ferner kann dadurch die notwendige Sintertemperatur erniedrigt werden.

Um bei einer Sinterung eine möglichst hohe Formstabilität zu gewährleisten, oder um nur eine partielle Sinterung eines Formkörpers zu erreichen, ist ferner ein gezielt einstellbarer Dichtegradient innerhalb eines porösen Formkörpers von Vorteil. Dadurch können bestimmte Bereiche bei niedrigerer Temperatur bereits gesintert werden (Korngrenzenverschmelzung), während andere Bereiche noch Formstabilität aufweisen bzw. ungesintert sind. Ferner kann sich die durch einen gezielt eingestellten Dichtegradienten innerhalb eines porösen Formkörpers ergebende gerichtet voranschreitende Sinterfront vorteilhaft auf die Wärmeleiteigenschaften des Formkörpers auswirken. Dies führt dazu, daß während des Sinterverlaufes keine Poren und/oder Gasblasen im gesinterten Werkstoff eingeschlossen werden. Dadurch läßt sich quasi ein stationäres in situ Zonensintern durchführen.

Aus DE 19943103 sind Dispersionen und Formkörper sowie deren Herstellung bekannt, die mehr als 80 Gew.% Füllgrad aufweisen und amorphe SiO₂-Partikel mit bimodaler Korngrößenverteilung enthalten. Dieses Verfahren eignet sich zwar zur Herstellung von sehr hohen Füllgraden, jedoch können damit keine gezielten Dichtegradienten innerhalb eines Formkörpers realisiert werden.

Ein nasschemisches Verfahren zur Formgebung von porösen SiO₂-Formkörpern ist die elektrophoretische Abscheidung von Partikeln wie z. B. in EP 200242 beschrieben. Unter der elektrophoretischen Abscheidung versteht man die Bewegung und Koagulation von elektrisch oberflächengeladenen Teilchen in einer Suspension unter einem anliegenden, statischen elektrischen Feld. Die Abscheidung der Partikel findet dabei an einer der beiden Elektroden statt. Zur Vermeidung von prozessinhärenten Problemen bei der Abscheidung von amorphen SiO₂-Partikeln aus wässrigen Suspensionen, wie der Bildung von Blasen, kann die elektrophoretische Abscheidung auch durch Verwendung ionenpermeabler Membranen modifiziert werden, wie in EP 446999 beschrieben. Die Abscheidung und Formgebung des Grünkörpers findet dann an der für kolloidale Partikel undurchlässigen Membran statt. Die bei diesen Verfahren erreichten Feststoffgehalte der Grünkörper liegen bei bis zu 60 Gew.%.

Die elektrophoretische Abscheidung findet zur Beschichtung von elektrischen Bauteilen mit polymeren Filmen seit Jahren breite Anwendung. Im Bereich der keramischen Werkstoffe existieren nur wenige Applikationen, die ebenfalls hauptsächlich auf die Beschichtung von elektrisch leitfähigen Oberflächen abzielen.

Aus US 6066364 ist ein elektrophoretisches Abscheideverfahren bekannt, mit dem dichte und fest anhaftende Schichten auf einer Substratoberfläche hergestellt werden können. Dabei werden die Poren an der Substratoberfläche verschlossen und auf die dichte Randschicht zusätzliche Schichten abgeschieden.

In US 6012304 ist eine elektrophoretische Abscheidung von SiO₂-Pulver aus Wasser zur Herstellung von Formen aus Kieselglas beschrieben. Dabei werden Partikel mit einem Partikeldurchmesser im Bereich von 2-5 µm verwendet, um eine hohe Porosität innerhalb des abgeschiedenen Formkörpers zu gewährleisten. Sind die abgeschiedenen Schichten hoch porös, so liegt mittels des Wassers in den Poren immer eine elektrische Leitfähigkeit vor, so daß das elektrische Feld nicht zusammenbricht und man insgesamt dicke Schichten abscheiden kann.

Aus DE 44 40 104 A ist ein hochdichter Formkörper aus Quarzglas bekannt, der amorph ist (Cristobalitgehalt höchstens 1%) und durch Wärmebehandlung aus einem Grundkörper erhalten wurde. Dieser Körper ist zumindest in einem Teil seiner Oberfläche transparent. Es wird beschrieben, dass der SiO₂ Grundkörper nach einer Sinterung porös (Poren < 20 µm) und opak ist und nach einer zweiten lokale Temperaturerhöhung bei einer höheren Temperatur (von 1650 bis 2200°C) transparent wird.

Aus US-A 5,989,021 und EP-A 0 909 743 geht ein Kieselglastiegel hervor, der verschiedene Schichten trägt; d. h. sowohl offenporig (opak) als auch geschlossenporig mit dichtgesinterten Bereichen (transparent) ist.

Eine Aufgabe der vorliegenden Erfindung war es, ein einfaches, schnelles und billiges Verfahren bereit zu stellen, mit dem poröse SiO₂-Grünkörper mit extrem hoher Gründichte oder poröse SiO₂-Grünkörper mit einem gezielt eingestellten Dichtegradienten innerhalb des Grünkörpers hergestellt werden können.

Die Aufgabe wird gelöst durch ein Verfahren, welches dadurch gekennzeichnet ist, daß ein an sich bekannter poröser Grünkörper aus amorphem SiO₂ mittels einer elektrophoretischen Abscheidung von SiO₂-Partikeln in den Poren des Grünkörpers nachverdichtet wird.

Als poröser Grünkörper aus amorphem SiO₂ kann prinzipiell jeder aus dem Stand der Technik bekannte Grünkörper verwendet werden. Bevorzugt wird ein Grünkörper verwendet, der nach dem in DE 19943103 beschriebenen Verfahren hergestellt wurde.

Zur elektrophoretischen Abscheidung der SiO₂-Partikel innerhalb der Poren eines porösen SiO₂-Grünkörpers wird der zu verdichtende Grünkörper zwischen 2 Elektroden gebracht. Der Raum zwischen Anode und Grünkörper wird mit einer Dispersion befüllt, die die SiO₂-Partikel die in den Poren des Grünkörpers abgeschieden werden sollen und ein Dispersionsmittel enthält. Zusätzlich kann der Grünkörper bereits vor dem Einbringen zwischen die 2 Elektroden mit dieser Dispersion getränkt werden.

Es werden bevorzugt massive oder netzförmige Elektroden aus einem elektrisch leitfähigen und chemisch beständigen Material, das bei Anlegen eines elektrischen Feldes nicht in Lösung geht, benutzt.

Als Elektrodenmaterial besonders bevorzugt sind elektrisch leitfähige Kunststoffe, Graphit oder Edelmetalle. Ganz besonders bevorzugt ist Platin. Darüber hinaus können die Elektroden aber auch aus Legierungen bestehen und/oder mit den oben genannten Stoffen beschichtet sein. Dadurch wird eine Kontamination des verdichteten Grünkörpers durch Fremdionen verhindert.

In der Dispersion werden als Dispersionsmittel polare oder unpolare organische Lösungsmittel, wie z.B. Alkohole, Ether, Ester, organische Säuren, gesättigte oder ungesättigte Kohlenwasserstoffe, oder Wasser oder deren Mischungen eingesetzt.

Vorzugsweise handelt es sich bei dem Dispersionsmittel um einen Alkohol wie Methanol, Ethanol, Propanol oder um Azeton oder um Wasser oder um deren Mischung. Besonders bevorzugt handelt es sich um Azeton oder um Wasser oder um deren Mischungen, ganz besonders bevorzugt handelt es sich um Wasser.

Besonders bevorzugt werden die Dispersionsmittel in hochreiner Form verwendet, wie sie z.B. nach literaturbekannten Verfahren erhalten werden können oder käuflich erhältlich sind.

Bei der Verwendung von Wasser wird vorzugsweise speziell gereinigtes Wasser verwendet, das einen Widerstand von ≥ 18 MΩ·cm aufweist.

Als zu dispergierende SiO₂-Partikel werden vorzugsweise amorphe SiO₂-Partikel verwendet.

Die spezifische Dichte der SiO₂-Partikel liegt bevorzugt zwischen 1,0 und 2,2 g/cm³. Besonders bevorzugt haben die Partikel eine spezifische Dichte zwischen 1,8 und 2,2 g/cm³. Insbesondere bevorzugt haben die Partikel eine spezifische Dichte zwischen 2,0 und 2,2 g/cm³.

Die amorphen SiO₂-Partikel wie z.B. Fused oder Fumed Silica weisen vorzugsweise eine Korngröße auf, die maximal so groß wie die mittlere Porengröße der Grünkörper ist. Bevorzugt sind Partikel mit einer mittleren Korngröße zwischen 50 nm und 10 µm. Besonders bevorzugt sind Partikel mit einer mittleren Korngröße, die mindestens den Faktor 10, bevorzugt mindestens den Faktor 100, kleiner ist als die mittlere Porengröße des Grünkörpers.

Bei einer solchen mittleren Korngröße lassen sich Poren von 100 nm bis 10 µm, wie sie typischerweise bei der nasschemischen Herstellung von Grünkörpern aus amorphem SiO₂ (wie in DE 19943103 beschrieben) entstehen, penetrieren und verschließen.

Die amorphen SiO₂-Partikel weisen vorzugsweise eine BET-Oberfläche von 0,001 m²/g - 400 m²/g. besonders bevorzugt von 10 m²/g - 380 m²/g, und ganz besonders bevorzugt von 50 m²/g - 380 m²/g auf. Die amorphen SiO₂-Partikel weisen vorzugsweise einen kristallinen Anteil von höchstens 1 % auf. Vorzugsweise zeigen sie ferner eine möglichst geringe Wechselwirkung mit dem Dispersionsmittel.

Diese Eigenschaften haben bevorzugt amorphe hochdisperse Kieselsäuren (Fumed Silica, hergestellt über Flammenpyrolyse). Sie sind käuflich erhältlich, z.B. unter der Bezeichnung HDK (Wacker-Chemie), Cabo-Sil (Cabot Corp.) oder Aerosil (Degussa).

Wenn obige Kriterien erfüllt werden, können auch Partikel anderer Herkunft verwendet werden, wie z.B. Naturquarz, Quarzglassand, glasige Kieselsäure, zermahlene Quarzgläser bzw. gemahlener Quarzglasabfall, nachgesinterte Kieselsäure (Fused Silica) sowie jede Art von amorphem gesinterten oder kompaktiertem SiO₂, sowie chemisch hergestelltes Kieselglas, wie z.B. gefällte Kieselsäure, Xerogele, oder Aerogele.

Selbstverständlich können auch Mischungen unterschiedlicher SiO₂-Partikel dispergiert werden.

In einer besonderen Ausführungsform des Verfahrens liegen die SiO₂-Partikel in hochreiner Form vor, d.h. mit einem Fremdatomanteil insbesondere an Metallen von ≤ 300 ppmw (parts per million per weight), bevorzugt ≤ 100 ppmw, besonders bevorzugt ≤ 10 ppmw und ganz besonders bevorzugt ≤ 1 ppmw.

Die SiO₂-Partikel werden in dem Dispersionsmittel in an sich bekannter Art und Weise dispergiert. Dazu können alle dem Fachmann bekannten Methoden verwendet werden. Es können beliebige Füllgrade eingestellt werden. Bevorzugt werden jedoch Füllgrade von 5 bis 60 Gew.% SiO₂-Partikel, besonders bevorzugt Füllgrade zwischen 5 und 30 Gew.% SiO₂-Partikel eingestellt.

Auf Grund der geringen Füllgrade lassen sich die SiO₂- Partikel besser dispergieren und eine eventuell auftretende Thixotropie spielt keine nennenswerte Rolle.

Die Viskosität der Dispersion liegt bevorzugt zwischen 1 und 1000 mPa·s, besonders bevorzugt zwischen 1 und 100 mPa·s.

Das erfindungsgemäße Verfahren kann auch dahingehend variiert werden, daß unterschiedliche Dispersionen nacheinander eingesetzt werden.

Die Dispersion kann zusätzlich Metallpartikel, Metallverbindungen oder Metallsalze enthalten. Diese vermitteln den jeweiligen Grünkörpern, die dem erfindungsgemäßen Verfahren ausgesetzt werden, zusätzliche Eigenschaften. Die Metallpartikel, Metallverbindungen oder Metallsalze können während und/oder nach der Herstellung der Dispersion zugesetzt werden.

Dem Dispersionsmittel können auch mineralische Basen zugesetzt werden. Bevorzugt sind leicht flüchtige Substanzen, wie z. B. Ammoniumverbindungen, besonders bevorzugt NH₃, Tetramethylammoniumhydroxid (TMAH) oder NaOH, oder auch deren Mischungen.

Bevorzugt wird im Dispersionsmittel ein pH-Wert zwischen 7 und 12, besonders bevorzugt zwischen 9 und 12 eingestellt.

Bevorzugt wird im Dispersionsmittel ein Zeta-Potential zwischen -10 und -70 mV, bevorzugt zwischen -30 und -70 mV, eingestellt. Dadurch kommt es zu einer Stabilisierung der Teilchen innerhalb der Dispersion, wodurch die Dispersion flüssiger und leichter verarbeitbar ist. Darüber hinaus erhöht sich die Triebkraft auf die Teilchen bei der elektrophoretischen, Abscheidung.

Alternativ kann auch gänzlich auf die Zugabe von Zusätzen zu Wasser verzichtet werden, um den Grad der Verunreinigung durch Zusatzstoffe zu minimieren.

Für die elektrophoretische Abscheidung wird zwischen den Elektroden eine elektrische Gleichspannung von 5 bis 100 V bzw. eine elektrische Feldstärke von 0,1 bis 20 V/cm angelegt. Dadurch werden die dispergierten SiO₂-Partikel mit unterschiedlichen Geschwindigkeiten in die Poren des porösen Grünkörpers transportiert und dort abgeschieden.

Die Abscheidedauer beträgt in der Regel zwischen 5 Sekunden und 30 Minuten, je nach gewünschter Eindringtiefe und/oder Wandstärke und/oder Porengröße des Grünkörpers.

Die elektrophoretische Nachverdichtung eines Grünkörpers verläuft vorzugsweise mit einer Abscheiderate zwischen 0,01 und 0,1 g/min·cm.

Das erfindungsgemäße Verfahren führt durch die Ablagerung der SiO₂-Partikel in den Poren des Grünkörpers zu einer Verdichtung des Grünkörpers. Abhängig von den Prozessparametern, wie z. B. elektrisches Feld, Füllgrad der Dispersion, Teilchendurchmesser, Zetapotential u.ä., sowie den Eigenschaften des Grünkörpers, wie Porenradienverteilung und Gründichte, variieren die imprägnierte bzw. nachverdichtete Tiefe und der Anstieg der Gründichte.

Mittels des erfindungsgemäßen Verfahrens können sowohl planare Geometrien als auch Hohlkörper, vorzugsweise zylindersymmetrische Geometrien, insbesondere tiegelförmige Grünkörper, elektrophoretisch imprägniert werden.

Zusätzlich können zur Stabilisierung der Abscheidebedingungen, insbesondere der Stzömungsverhälnisse, zur Unterstützung der zu imprägnierenden Geometrien sowie zur erleichterten Entformung verschiedene Folien zwischen Grünkörper und Elektrode eingesetzt werden, insbesondere auch solche, die für Ionen durchlässig sind, nicht aber für kolloidale SiO₂-Partikel.

Darüber hinaus kann bei hohen Abscheideraten, um die elektrophoretische Abscheidung einer Schicht auf der Oberfläche des zu imprägnierenden Grünkörpers zu verhindern, das angelegte elektrische Feld kurzzeitig umgepolt werden. Vorzugsweise wird das angelegte elektrische Feld im Laufe des Verfahrens mehrfach kurzzeitig umgepolt. Die Umpolung erfolgt dabei vorzugsweise für bis zu einem Drittel der Abscheidezeit seit der letzten Umpolung. Durch die kurzzeitige Umpolung kann eine auf der Oberfläche des Grünkörpers gebildete Schicht wieder entfernt werden, während gleichzeitig die in den Porenkanälen des Grünkörpers abgeschiedenen Teilchen auf Grund von Kapillarkräften im Innern verbleiben.

Bevorzugt lassen sich SiO₂-Grünkörper mit Poren eines mittleren Durchmessers zwischen 50 nm und 10 µm vollständig oder teilweise nachverdichten. Die imprägnierte Tiefe liegt im erfindungsgemäß hergestellten SiO₂-Grünkörper zwischen 1 µm und 10 mm bei einem gleichzeitigen Anstieg der Gründichte in den verdichteten Bereichen von bis zu 30 % im Vergleich zum unverdichteten Ausgangsgrünkörper.

Die vorliegende Erfindung betrifft daher auch poröse SiO₂-Formkörper mit extrem hoher Gründichte. Unter extrem hoher Gründichte sind Formkörper mit einer Gründichte größer 95%, bevorzugt größer 97% besonders bevorzugt größer 99% zu verstehen.

Die mittels elektrophoretischer Abscheidung herstellbaren SiO₂-Grünkörper sind dadurch gekennzeichnet, dass sie im elektrophoretisch nachverdichteten Bereich zu mindestens 75 Vol.%, bevorzugt zu mindestens 80 Vol.% aus SiO₂-Partikeln bestehen. Falls der Grünkörper eine Restporosität aufweist, so ist im elektrophoretisch nachverdichteten Bereich ein Porenvolumen (bestimmt mittels Quecksilberporosimetrie) von 1 ml/g bis 0,01 ml/g, vorzugsweise 0,8 ml/g bis 0,1 ml/g und besonders bevorzugt von 0,2 ml/g bis 0,1 ml/g vorhanden. Die Poren weisen dann einen Porendurchmesser von 5 nm bis 200 µm, vorzugsweise 5 nm bis 50 nm auf. Die Dichte im elektrophoretisch nachverdichteten Bereich des erfindungsgemäßen Grünkörpers liegt vorzugsweise zwischen 1,7 g/cm³ und 2,0 g/cm³.

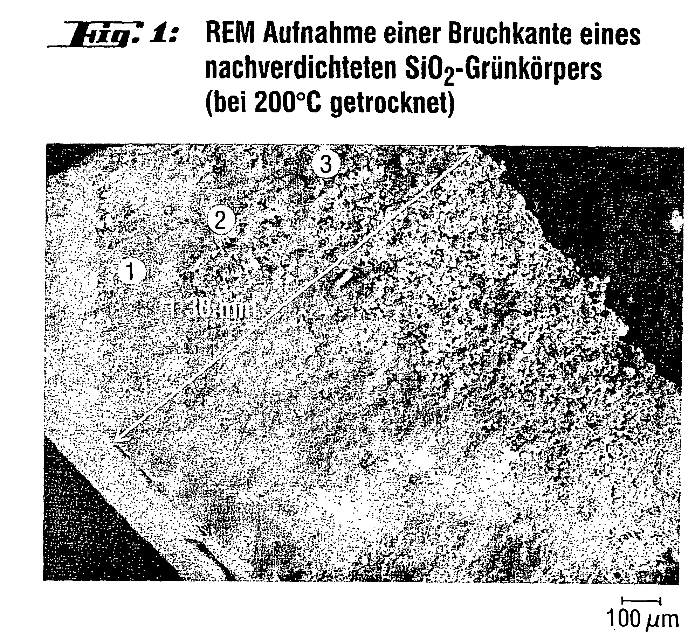

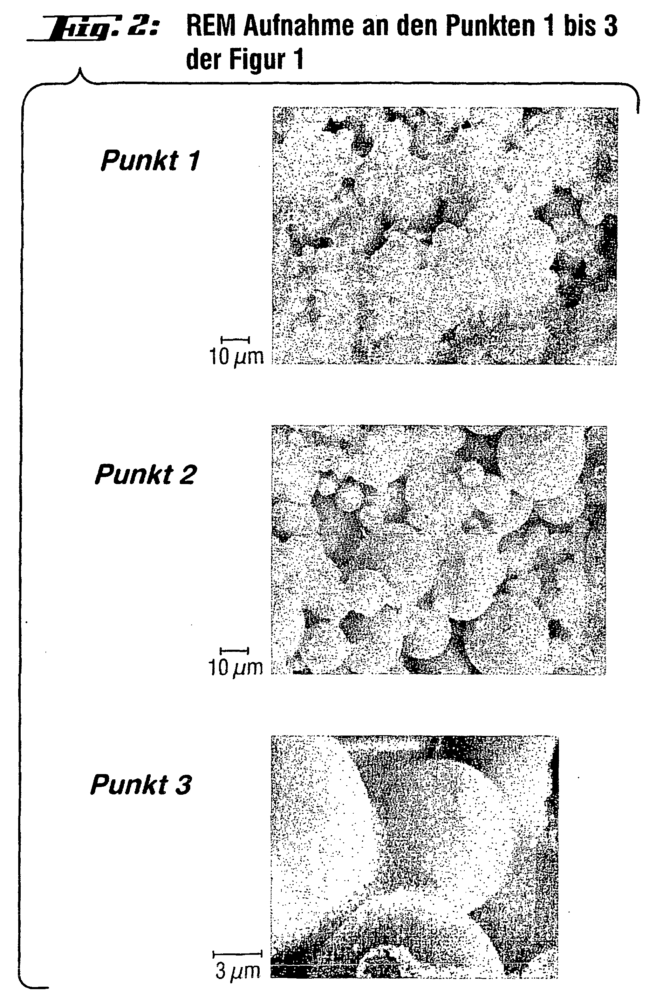

Insgesamt lassen sich also sowohl Dichte- als auch Poren- als auch Porenvolumengradienten innerhalb eines SiO₂-Grünkörpers mit Hilfe des erfindungsgemäßen Verfahrens erzeugen (siehe Fig. 1).

In einer Ausführungsform ist ein erfindungsgemäßer Grünkörper mit gegebener Wandstärke auf der einen Seite der Wand nachverdichtet, während er auf der anderen Seite der Wand gar nicht oder nur wenig nachverdichtet ist.

In einer weiteren Ausführungsform ist ein erfindungsgemäßer Grünkörper mit gegebener Wandstärke auf beiden Wandseiten nachverdichtet und nur in der Mitte wenig bis nicht nachverdichtet. Ein solcher Grünkörper weist in der Wand eine Sandwichstruktur auf. Ein solcher Grünkörper läßt sich dadurch herstellen, daß das erfindungsgemäße Verfahren zweimal durchgeführt wird, wobei die elektrophoretische Nachverdichtung nacheinander für beide Seiten der Wand durchgeführt wird.

Ein erfindungsgemäßer Grünkörper kann aufgrund seiner besonderen Eigenschaften vielfältig verwendet werden, z. B. als Filtermaterialien, Wärmedämmmaterialien, Hitzeschilder, Katalysatorträgermaterialien sowie als "preform" für Glasfasern, Lichtleitfasern, optische Gläser oder Quarzgüter aller Art.

In einer weiteren Ausführungsform der Erfindung sind die porösen Grünkörper mit unterschiedlichsten Molekülen, Stoffen und Substanzen ganz oder teilweise versetzt. Bevorzugt sind Moleküle, Stoffe und Substanzen, die katalytisch aktiv sind. Dabei können alle dem Fachmann bekannten Methoden angewendet werden, wie sie z.B. in US 5655046 beschrieben sind.

Die erfindungsgemäßen Grünkörper können einer Sinterung unterzoqen werden. Dabei können alle dem Fachmann bekannten Methoden, wie z.B. Vakuumsintern, Zonensintern, Sintern im Lichtbogen, Sintern mittels Plasma oder Laser, induktives Sintern oder Sintern in einer Gasatmosphäre bzw. Gasstrom verwendet werden. Bevorzugt ist eine Sinterung im Vakuum oder einem Gasstrom. Besonders bevorzugt ist eine Sinterung im Vakuum mit Drücken zwischen 10⁻⁵ mbar und 10⁻³ mbar. Vorteilhafterweise zeigen erfindungsgemäße porenfreie Grünkörper keine Sinterschwindung.

Die zur Sinterung notwendigen Temperaturen liegen zwischen 1300°C und 1700°C, bevorzugt zwischen 1400°C und 1600°C.

Der Grünkörper kann dabei wie im Stand der Technik bekannt frei stehend, liegend oder hängend sowie mit jeder dem Fachmann bekannten Methode abgestützt gesintert werden. Ferner ist auch eine Sinterung in einer sinterstabilen Form möglich. Bevorzugt sind hierbei Formen aus Materialien, die nicht zu einer nachträglichen Verunreinigung des Sintergutes führen. Besonders bevorzugt sind Formen aus Graphit und/ oder Siliciumcarbid und/oder Siliciumnitrid. Handelt es sich bei den zu sinternden Grünkörpern um Tiegel, so ist auch eine Sinterung auf einem Dorn, bestehend z.B. aus Graphit möglich, wie z.B. in der DE 2218766 beschrieben.

Ferner können die Grünkörper, wie im Stand der Technik bekannt, auch in einer speziellen Atmosphäre wie z.B. He, SiF₄ gesintert werden, um eine Nachreinigung und/oder eine Anreicherung bestimmter Atome und Moleküle im Sintergut zu erreichen. Dabei können alle dem Fachmann bekannten Methoden, wie z.B. in US 4979971 beschrieben, verwendet werden. Ferner können zur Nachreinigung auch Methoden verwendet werden, wie sie z.B. in EP 199787 beschrieben sind.

Bevorzugte Substanzen zur Nachreinigung sind dabei solche, die mit den Verunreinigungen leicht flüchtige Verbindungen, wie z.B. Metallhalogenide bilden. Bevorzugte Substanzen sind reaktive Gase, wie z.B. Cl₂ oder HCl, sowie leicht zersetzbare Stoffe wie z.B. Thionylchlorid. Besonders bevorzugt ist der Einsatz von Thionylchlorid oberhalb der Zersetzungstemperatur.

Auf diese Weise läßt sich ein 100% amorpher (kein Cristobalit), transparenter, gasundurchlässiger gesinterter Kieselglasformkörper mit einer Dichte von mindestens 2,15 g/cm³ vorzugsweise 2,2 g/cm³, herstellen.

Aus einem erfindungsgemäß nachverdichteten Grünkörper läßt sich mittels Sinterung, bei der die Sintertemperatur so gewählt wird, daß aufgrund unterschiedlicher Partikelgrößenverteilung und Dichteunterschieden einige Bereiche des Grünkörpers bereits vollständig dicht sintern, während andere Bereiche noch eine Porosität aufweisen ein Kieselglastiegel für das Ziehen von Siliziumeinkristallen herstellen.

Durch die nachträgliche Verdichtung eines Bereiches des Grünkörpers mittels kleinerer Partikel verringert sich im imprägnierten Bereich die Porosität, d. h. die Größe der Poren nimmt ab. Kleinere und dichter gepackte Partikle sintern bei niedrigeren Temperaturen und weisen eine höhere Sinteraktivität auf. Dadurch beginnt die Sinterung im nachverdichteten Bereich bereits bei niedrigeren Temperaturen verglichen zu anderen Bereichen des ursprünglichen Grünkörpers.

Darüber hinaus wird durch dieses Verfahren der Einschluß von Poren beim Sintern verhindert. Entsprechend einem Zonensintern, wie z. B. in "Preparation of high-purity silica glasses by sintering of colloidal particles", Glastech. Ber. 60 (1987) 125-132, beschrieben, werden die Poren in Richtung der fortschreitenden Sinterung, d.h. von der verdichteten zur unverdichteten Region hin, aus dem Grünkörper hinausgetrieben, d. h. es findet bei einer isotropen Temperaturverteilung im Sintergut ein in situ Zonensintern statt.

Zur Sinterung können alle dem Fachmann bekannten Methoden, wie z. B. Vakuumsintern, Zonensintern, Sintern im Lichtbogen,

Sintern mittels Plasma oder Laser, induktives Sintern oder Sintern in einer Gasatmosphäre bzw. Gasstrom verwendet werden. Bevorzugt ist eine Sinterung im Vakuum oder einem Gasstrom. Besonders bevorzugt ist eine Sinterung im Vakuum mit Drücken zwischen 10⁻⁵ mbar und 10⁻³ mbar.

Die zur Sinterung notwendigen Temperaturen liegen zwischen 1300°C und 1600°C, bevorzugt zwischen 1300°C und 1500°C. Das Sinterverhalten ist dabei abhängig von der Tiefe des elektrophoretisch nachverdichteten Bereiches, seiner Dichte sowie den eingebrachten Partikelgrößen.

Der Grünkörper kann wie im Stand der Technik bekannt und bereits in der Anmeldung beschrieben gesintert und ggf. nachgereinigt werden.

Ein so hergestellter Kieselglasformkörper eignet sich prinzipiell für alle Anwendungen, in denen Kiselglas verwendet wird. Bevorzugte Anwendungsfelder sind Quarzgüter aller Art, Glasfasern, Lichtleitfasern und optische Gläser.

Ein derartiger Kieselglastiegel weist sowohl offenporige als auch geschlossenporigdichtgesinterte Bereiche auf mit einer innenseitigen gasundurchlässigen Verglasung und einer außenseitigen Porosität, was bezüglich der Wärmeleiteigenschaften eine eingeschränkte Infrarotrückstrahlung bewirkt.

Die Poren auf der Außenseite sind dabei vorzugsweise im Mittel nicht größer als 30 µm, besonders bevorzugt nicht größer als 10µm.

In einer anderen Ausführungsform weist ein derartiger Kieselglastiegel eine innenseitige, gasundurchlässige Verglasung und eine außenseitige, gasundurchlässige Verglasung auf.

Die gesinterten Kieselglaskörper können mit Molekülen, Stoffen und Substanzen versetzt sein, die den jeweiligen Formkörpern zusätzliche Eigenschaften vermitteln.

Zum Beispiel verändert eine Beimischung von Siliciumpartikeln und/oder Aluminiumoxid und/oder Titanoxid wie in US 4033780 und US 4047966 beschrieben, die optischen Eigenschaften der gesinterten Formkörper durch Reduzierung der SiOH-Gruppen sowie des Wassergehaltes. Ferner wird durch die Siliciumpartikel der Sauerstoffgehalt im gesinterten Formkörper reduziert.

Darüber hinaus kann die Formstabilität während der Sinterung bzw. bei thermischer Belastung des gesinterten Formkörpers erhöht bzw. beeinflußt werden.

Die im erfindungsgemäßen Verfahren eingesetzte Dispersion und/oder der poröse Grünkörper können ganz oder teilweise mit Verbindungen versetzt werden, die eine Cristobalitbildung fördern oder bewirken. Dabei können alle dem Fachmann bekannten Verbindungen verwendet werden, die eine Cristobalitbildung fördern und/oder bewirken, wie z.B. in EP 0753605 US 5053359 oder GB 1428788 beschrieben. Bevorzugt sind hierbei BaOH und/oder Aluminiumverbindungen.

Ferner kann, wie in US 4018615 beschrieben, eine Cristobalitbildung ganz oder teilweise erreicht werden, wenn kristalline SiO₂-Partikel der Dispersion und/oder dem porösen Grünkörper zugesetzt werden. Die kristallinen Partikel sollten dabei die Partikelgrößen aufweisen, wie sie für die amorphen SiO₂-Partikel beschrieben wurden.

Nach dem Sintern eines solchen Grünkörpers erhält man Formkörper, die eine Cristobalitschicht innen und/oder außen besitzen oder ganz aus Cristobalit bestehen. Handelt es sich bei den gesinterten Formkörpern insbesondere um Tiegel zum Kristallziehen von Si-Einkristallen, eignen sich diese besonders zum Kristallziehen, da sie temperaturstabiler sind und z.B. eine Siliziumschmelze weniger stark verunreinigen. Dadurch kann eine höhere Ausbeute beim Kristallziehen erreicht werden.

Eine Reduzierung der Migration von Verunreinigungen während des Einkristallziehens kann auch durch die Anwesenheit von Aluminium oder Aluminium enthaltenden Stoffen im Ziehtiegel, wie in DE 19710672 beschrieben, erreicht werden. Dies kann durch Zugabe von entsprechenden Partikeln oder gelösten Substanzen zu der Dispersion und/oder dem porösen Grünkörper erreicht werden.

Die folgenden Beispiele und Vergleichsbeispiele dienen der weiteren Erläuterung der Erfindung.

### Beispiel 1:

### a)Herstellung von Grünkörpern nach DE 19943103.

In einem 600 ml Kunststoffbecher wurden 300 g bidestilliertes H₂O vorgelegt. Mit einem handelsüblichen Dissolver wurden 1464,7 g Fused Silica (Excelica® SE-30 der Firma Tokoyama, mittlere Teilchengröße 30 µm) mittels einer Dosierwaage bei konstantem Drehmoment unter Unterdruck (0,1 bar) in wenigen Minuten dispergiert. Die so hergestellte Dispersion hatte dementsprechend einen Feststoffgehalt von 83,0 Gew.%.

Ein Teil der Dispersion wurde in drei oben offene, rechteckige Formen aus PTFE (6 cm*6 cm*1 cm) gegossen. Nach 4 Stunden wurden die Formkörper durch Zerlegen der Form entformt.

Zwei Grünkörper wurden in einem Trockenschrank bei 200°C getrocknet. Die getrockneten Grünkörper hatten eine Dichte von 1,67 g/cm³.

Mittels Quecksilberporosimetrie wurde an einem Grünkörper die Porenradienverteilung bestimmt. Der Grünkörper besaß eine monomodale Porenradienverteilung mit einem ausgeprägten Maximum zwischen 2 und 5 µm und einem mittleren Porenradius von 2,68 µm.

Der zweite getrocknete Grünkörper wurde unter Hochvakuum (10⁻⁵ mbar) gesintert, indem er für 15 Minuten auf 1550 °C mit einer Aufheizrate von 5°C/min erhitzt wurde.

Der so erhaltene gesinterte Formkörper hatte eine Dichte von 2,06 g/cm³ auf. Auf Grund der vorhandenen Restporosität wies der Formkörper keine Transparenz auf und war noch gasdurchlässig.

### b) elektrophoretische Nachverdichtung

In einem 600 ml Kunststoffbecher wurden erneut 400 g bidestilliertes H₂O vorgelegt. Mit Hilfe eines handelsüblichen Dissolvers wurden 22 g Fumed Silica (Aerosil® OX 50 der Firma Degussa, BET Oberfläche 50 m²/g) in 5 min bei konstantem Drehmoment dispergiert. Die so hergestellte Dispersion hatte dementsprechend einen Feststoffgehalt von 5 Gew.%. Der hergestellten Dispersion wurden 0,11 g Tetramethylammoniumhydroxid (TMAH) zur Einstellung des Zetapotentials der Teilchen zugegeben, was einem Gehalt von 0,5 Gew.% bezogen auf die Masse des dispergierten OX 50 entspricht. Die Viskosität der so hergestellten Dispersion lag bei 10 mPa·s, der pH-Wert bei 9,4 und die spezifische elektrische Leitfähigkeit betrug 96 µS/cm.

Die so hergestellte Dispersion wurde in die anodenseitige Kammer einer Elektrophoresezelle eingefüllt. Die Kathodenkammer wurde mit bidestilliertem Wasser, versetzt mit 0,5 Gew.% TMAH, befüllt. Zwischen Anoden- und Kathodenkammer wurde der zuvor hergestellte feuchte Grünkörper eingespannt. Der Abstand zwischen Kathode und Anode betrug insgesamt 5 cm. An die Elektroden der Elektrophoresekammer wurde dann eine elektrische Gleichspannung von 10 V für die Dauer von 3 Minuten angelegt. Nach jeweils einer Minute Abscheidedauer wurde für 20 Sekunden das elektrische Feld umgepolt, um eine möglicherweise auf der Oberfläche des Grünkörpers abgeschiedene Schicht, die die Porenkanäle verstopft, wieder zu entfernen. Somit betrug die Gesamtdauer des Verdichtungsprozesses 4 Minuten.

Nach der elektrophoretischen Verdichtung wurde der Grünkörper bei 200°C in einem Trockenschrank getrocknet.

Der so hergestellte Grünkörper wies eine graduelle Dichteänderung von der imprägnierten zur gegenüberliegenden Oberfläche auf. Dies läßt sich anhand von REM-Aufnahmen zeigen (siehe Abbildung 1).
Der verdichtete Bereich erstreckte sich über eine Tiefe von 5 mm.

Im verdichteten Bereich ließ sich ein mittlerer Anstieg der Dichte von 1,67 g/cm³ auf 1,78 g/cm³ feststellen. Mittels Quecksilberporosimetrie wurde die Porenradienverteilung des elektrophoretisch verdichteten Grünkörpers ermittelt. Es zeigte sich zusätzlich zu den bereits im ursprünglichen Grünkörper vorhandenen Poren von ca. 3 µm eine bimodale Porenverteilung mit einem Anteil an Poren im Bereich von 40 nm. Der Anteil der Poren im Mikrometerbereich nahm dementsprechend im Vergleich zum nicht imprägnierten Grünkörper ab. Anhand von REM-Aufnahmen ließ sich erkennen, daß im imprägnierten Bereich nahezu ausschließlich Poren im Nanometerbereich auftraten, mit wachsendem Porenradius bei zunehmendem Abstand von der imprägnierten Oberfläche (siehe Abbildung 2).

Der so hergestellte und getrocknete Grünkörper wurde unter Hochvakuum (10⁻⁵ mbar) gesintert, indem er für 15 Minuten auf 1550 °C mit einer Aufheizrate von 5 °C/min erhitzt wurde.

Der so hergestellte Formkörper wies ebenfalls einen Dichtegradienten auf. Von der verdichteten Oberfläche ausgehend, bis zu einer Dicke von 5 mm, bestand der Formkörper aus 100 % amorphem, transparenten und gasundurchlässigen Kieselglas ohne Gaseinschlüsse, mit einer Dichte von 2,20 g/cm³. Zur gegenüberliegenden Oberfläche nahm die Dichte geringfügig ab (2,08 g/cm³). Daraus resultierend war der gesinterte Formkörper dort nicht transparent.

### Beispiel 2:

### a) Herstellung von Grünkörpern nach DE 19943103.

In einem 600 ml Kunststoffbecher wurden 300 g bidestilliertes H₂O vorgelegt. Mit einem handelsüblichen Dissolver wurden zunächst 87,9 g Fumed Silica (Aerosil® OX 50 der Firma Degussa, BET-Oberfläche 50 m²/g) und anschließend 1376,8 g Fused Silica (Excelica® SE-15 der Firma Tokoyama, mittlere Teilchengröße 15 µm) mittels einer Dosierwaage bei konstantem Drehmoment unter Unterdruck (0,1 bar) in 30 Minuten dispergiert. Die so hergestellte Dispersion hatte einen Feststoffgehalt von 83,0 Gew.%.

Ein Teil der Dispersion wurde in drei oben offene, rechteckige Formen aus PTFE (6 cm*6·cm*1 cm) gegossen. Nach 4 Stunden wurden die Formkörper durch Zerlegen der Form entformt und zwei in einem Trockenschrank bei 200 °C getrocknet.

Die getrockneten Grünkörper hatten eine Dichte von 1,67 g/cm³. Mittels Quecksilberporosimetrie wurde die Porenradienverteilung der getrockneten Grünkörper bestimmt. Die Grünkörper besaßen eine bimodale Porenradienverteilung mit einem ausgeprägten Maximum zwischen 2 und 5 µm und einem zweiten Maximum zwischen 90 und 120 nm.

### b) elektrophoretische Nachverdichtung

In einem 600 ml Kunststoffbecher wurden erneut 400 g bidestilliertes H₂O vorgelegt. Mit Hilfe eines handelsüblichen Dissolvers wurden zunächst 22 g Fumed Silica (Aerosil® OX 50 der Firma Degussa, BET Oberfläche 50 m²/g)und anschließend 22 g Fumed Silica (Aerosil® A380 der Firma Degussa, BET Oberfläche 380 m²/g) in 10 min bei konstantem Drehmoment dispergiert. Dies entspricht einem Feststoffgehalt von 10 Gew.%. Die Viskosität der so hergestellten Dispersion lag bei 22 mPa·s, der pH-Wert bei 3,9 und die spezifische elektrische Leitfähigkeit betrug 26 µS/cm.

Die so hergestellte Dispersion wurde in die anodenseitige Kammer der Elektrophoresezelle eingefüllt. Die Kathodenkammer wurde mit bidestilliertem Wasser befüllt. Zwischen Anoden- und Kathodenkammer wurde der zuvor hergestellte und getrocknete Grünkörper eingespannt. Danach wurde wie im Beispiel 1 beschrieben verfahren.
Der zweite, nicht im Trockenschrank getrocknete Grünkörper wurde ebenfalls in die Elektrophoresezelle eingespannt und mit den beschriebenen Prozeßparametern elektrophoretisch imprägniert.

Danach wurden die beiden elektrophoretisch nachverdichteten Grünkörper bei 200 °C in einem Trockenschrank getrocknet.

Die so hergestellten Grünkörper wiesen beide eine graduelle Dichteänderung von der imprägnierten zur gegenüberliegenden Oberfläche auf. Ein Unterschied in der Gründichte und Porenradienverteilung der beiden Grünkörper untereinander ließ sich nicht feststellen. Der verdichtete Bereich erstreckte sich jeweils über eine Tiefe von 5 mm.

Im verdichteten Bereich ließ sich ein mittlerer Anstieg der Dichte von 1,67 g/cm³ auf 1,78 g/cm³ feststellen. Mittels Quecksilberporosimetrie wurden die Porenradienverteilungen der elektrophoretisch verdichteten Grünkörper ermittelt. Es zeigte sich zusätzlich zu den bereits im ursprünglichen Grünkörper vorhandenen Poren von ca. 3 µm eine bimodale Porenverteilung mit einem Anteil an Poren im Bereich von 40 nm. Der Anteil der Poren im Mikrometerbereich nimmt im Vergleich zum nicht verdichteten Grünkörper dementsprechend ab. Anhand von REM-Aufnahmen ließ sich erkennen, daß im imprägnierten Bereich nahezu ausschließlich Poren im Nanometerbereich auftraten, wobei der Porenradius mit wachsendem Abstand von der imprägnierten Oberflache zunahm.

## Patentansprüche

1. Verfahren zur Herstellung von porösen SiO₂-Grünkörpern mit extrem hoher Gründichte oder porösen SiO₂-Grünkörpern mit einem gezielt eingestellten Dichtegradienten innerhalb des Grünkörpers, **dadurch gekennzeichnet, daß** ein an sich bekannter poröser SiO₂-Grünkörper aus amorphem SiO₂ mittels einer elektrophoretischen Abscheidung von SiO₂-Partikeln in den Poren des Grünkörpers nachverdichtet wird.

2. Verfahren nach Anspruch 1, **dadurch gekennzeichnet, daß** zur elektrophoretischen Abscheidung der SiO₂-Partikel innerhalb der Poren des porösen SiO₂-Grünkörpers der zu verdichtende Grünkörper zwischen 2 Elektroden gebracht wird und der Raum zwischen Anode und Grünkörper mit einer Dispersion befüllt wird, die SiO₂-Partikel und ein Dispersionsmittel enthält.

3. Verfahren nach Anspruch 1 oder 2, **dadurch gekennzeichnet, daß** Elektroden aus einem elektrisch leitfähigen und chemisch beständigen Material eingesetzt werden, die bei Anlegen eines elektrischen Feldes nicht in Lösung gehen.

4. Verfahren nach einem der Ansprüche 2 oder 3, **dadurch gekennzeichnet, daß** als Dispersionsmittel polare oder unpolare organische Lösungsmittel, organische Säuren, gesättigte oder ungesättigte Kohlenwasserstoffe, Wasser oder deren Mischungen eingesetzt werden.

5. Verfahren nach einem der Ansprüche 1 bis 4, **dadurch gekennzeichnet, daß** als SiO₂-Partikel amorphe SiO₂-Partikel verwendet werden.

6. Verfahren nach Anspruch 5, **dadurch gekennzeichnet, daß** die amorphen SiO₂-Partikel eine BET-Oberfläche von 0,001 m²/g - 400 m²/g aufweisen.

7. Verfahren nach einem der Ansprüche 2 bis 6, **dadurch gekennzeichnet, daß** die Dispersion einen Füllgrad von 5 bis 60 Gew.% SiO₂-Partikeln aufweist.

8. Verfahren nach einem der Ansprüche 2 bis 7, **dadurch gekennzeichnet, daß** die Dispersion eine Viskosität zwischen 1 und 1000 mPa·s, aufweist.

9. verfahren nach einem der Ansprüche 2 bis 8, **dadurch gekennzeichnet, daß** im Dispersionsmittel ein pH-Wert zwischen 7 und 12 eingestellt ist.

10. Verfahren nach einem der Ansprüche 2 bis 9, **dadurch gekennzeichnet, daß** im Dispersionsmittel ein Zeta-Potential zwischen -10 und -70 mV eingestellt ist.

11. Verfahren nach einem der Ansprüche 1 bis 10, **dadurch gekennzeichnet, daß** zwischen den Elektroden eine elektrische Gleichspannung von 5 bis 100 V bzw. eine elektrische Feldstärke von 0,1 bis 20 V/cm angelegt ist.

12. Verfahren nach einem der Ansprüche 1 bis 11, **dadurch gekennzeichnet, daß** eine Abscheidedauer zwischen 5 Sekunden und 30 Minuten gewählt wird.

13. SiO₂-Grünkörper mit verdichteten Bereichen hergestellt mittels eines Verfahrens gemäß einem der Ansprüche 1 bis 12, **dadurch gekennzeichnet, daß** er eine Gründichte besitzt, die in den verdichteten Bereichen bis zu 30 % höher ist als im unverdichteten Ausgangsgrünkörper.

14. SiO₂-Grünkörper mit einer Gründichte größer 95%.

15. SiO₂-Grünkörper, **dadurch gekennzeichnet, dass** sie einen elektrophoretisch nachverdichteten Bereich besitzen und in diesem Bereich zu mindestens 75 Vol.%, aus SiO₂-Partikeln bestehen.

16. SiO₂-Grünkörper gemäß Anspruch 15, **dadurch gekennzeichnet, daß** die Dichte im elektrophoretisch nachverdichteten Bereich zwischen 1,7 g/cm³ und 2,0 g/cm³ liegt.

17. SiO₂-Grünkörper, gemäß einem der Ansprüche 13 bis 16, **dadurch gekennzeichnet, daß** die mittels eines Verfahrens gemäß einem der Ansprüche 1 bis 12 imprägnierte Tiefe im SiO₂-Grünkörper zwischen 1 µm und 10 mm liegt.

18. Kieselglastiegel zum Ziehen von Siliziumeinkristallen bestehend aus einem Kieselglasformkörper, der sowohl offenporige als auch geschlossenporig dichtgesinterte Bereiche aufweist, mit einer innenseitigen gasundurchlässigen Verglasung und eine außenseitigen Porosität

19. Kieselglastiegel gemäß Anspruch 18, **dadurch gekennzeichnet, daß** die Poren auf der Außenseite im mittel nicht größer als 30 µm sind.

## Claims

1. Process for producing porous SiO₂ green bodies with an extremely high green density or porous SiO₂ green bodies with a deliberately set density gradient within the green body, **characterized in that** a porous SiO₂ green body which is known per se and is made of amorphous SiO₂ is densified further by means of electrophoretic deposition of SiO₂ particles in the pores of the green body.

2. Process according to Claim 1, **characterized in that**, for the electrophoretic deposition of the SiO₂ particles within the pores of the porous SiO₂ green body, the green body which is to be densified is moved between two electrodes and the space between anode and green body is filled with a dispersion which contains SiO₂ particles and a dispersant.

3. Process according to Claim 1 or 2, **characterized in that** electrodes which are made from an electrically conductive and chemically stable material and do not dissolve when an electric field is applied are used.

4. Process according to one of Claims 2 and 3, **characterized in that** polar or nonpolar organic solvents, organic acids, saturated or unsaturated hydrocarbons, water or mixtures thereof are used as dispersant.

5. Process according to one of Claims 1 to 4, **characterized in that** the SiO₂ particles used are amorphous SiO₂ particles.

6. Process according to Claim 5, **characterized in that** the amorphous SiO₂ particles have a BET surface area of 0.001 m²/g - 400 m²/g.

7. Process according to one of Claims 2 to 6, **characterized in that** the dispersion has a filling level of 5 to 60% by weight of SiO₂ particles.

8. Process according to one of Claims 2 to 7, **characterized in that** the dispersion has a viscosity of between 1 and 1000 mPa·s.

9. Process according to one of Claims 2 to 8, **characterized in that** a pH of between 7 and 12 is set in the dispersant.

10. Process according to one of Claims 2 to 9, **characterized in that** a zeta potential of between -10 and -70 mV is set in the dispersant.

11. Process according to one of Claims 1 to 10, **characterized in that** an electric DC voltage of from 5 to 100 V or an electric field strength of from 0.1 to 20 V/cm is applied between the electrodes.

12. Process according to one of Claims 1 to 11, **characterized in that** a deposition time of between 5 seconds and 30 minutes is selected.

13. SiO₂ green body with densified regions produced by means of the process according to one of Claims 1 to 12, **characterized in that** it has a green density which in the densified regions is up to 30% higher than in the undensified starting green body.

14. SiO₂ green body having a green density of greater than 95%.

15. SiO₂ green bodies, **characterized in that** they have a region which has been densified further by electrophoresis and in this region comprise at least 75% by volume of SiO₂ particles.

16. SiO₂ green body according to Claim 15, **characterized in that** the density in the region which has been densified further by electrophoresis is between 1.7 g/cm³ and 2.0 g/cm³.

17. SiO₂ green body according to one of Claims 13 to 16, **characterized in that** the depth in the SiO₂ green body which is impregnated by means of the process according to one of Claims 1 to 12 is between 1 µm and 10 mm.

18. Silica glass crucible for pulling silicon single crystals, comprising a silica glass shaped body which has both open-pored and closed-pored densely sintered regions, having a gas-impermeable glaze on the inner side and a porosity on the outer side.

19. Silica glass crucible according to Claim 18, **characterized in that** the pores on the outer side are on average no larger than 30 µm.

## Revendications

1. Procédé pour la préparation de corps crus poreux de SiO₂ présentant une densité de corps cru extrêmement élevée ou de corps crus poreux de SiO₂ présentant un gradient de densité réglé de manière ciblée dans le corps cru, **caractérisé en ce qu'**on procède à une post-densification d'un corps cru poreux de SiO₂ connu en soi, en SiO₂ amorphe, au moyen de dépôt par électrophorèse de particules de SiO₂ dans les pores du corps cru.

2. Procédé selon la revendication 1, **caractérisé en ce que**, pour le dépôt par électrophorèse des particules de SiO₂ dans les pores du corps cru poreux de SiO₂, on place le corps cru à densifier entre deux électrodes et on remplit l'espace entre l'anode et le corps cru avec une dispersion qui contient des particules de SiO₂ et un dispersant.

3. Procédé selon la revendication 1 ou 2, **caractérisé en ce qu'**on utilise des électrodes en un matériau électriquement conductible et chimiquement résistant qui ne passent pas en solution lors de l'application d'un champ électrique.

4. Procédé selon l'une quelconque des revendications 2 ou 3, **caractérisé en ce qu'**on utilise comme dispersant des solvants organiques polaires ou non polaires, des acides organiques, des hydrocarbures saturés ou insaturés, de l'eau ou leurs mélanges.

5. Procédé selon l'une quelconque des revendications 1 à 4, **caractérisé en ce qu'**on utilise comme particules de SiO₂ des particules de SiO₂ amorphe.

6. Procédé selon la revendication 5, **caractérisé en ce que** les particules de SiO₂ amorphe présentent une surface BET de 0,001 m²/g à 400 m²/g.

7. Procédé selon l'une quelconque des revendications 2 à 6, **caractérisé en ce que** la dispersion présente un degré de charge de 5 à 60% en poids de particules de SiO₂.

8. Procédé selon l'une quelconque des revendications 2 à 7, **caractérisé en ce que** la dispersion présente une viscosité entre 1 et 1000 mPa.s.

9. Procédé selon l'une quelconque des revendications 2 à 8, **caractérisé en ce qu'**on a réglé un pH entre 7 et 12 dans le dispersant.

10. Procédé selon l'une quelconque des revendications 2 à 9, **caractérisé en ce qu'**on règle un potentiel zêta entre -10 et -70 mV dans le dispersant.

11. Procédé selon l'une quelconque des revendications 1 à 10, **caractérisé en ce qu'**on applique entre les électrodes une tension électrique continue de 5 à 100 V ou une intensité de champ électrique de 0,1 à 20 V/cm.

12. Procédé selon l'une quelconque des revendications 1 à 11, **caractérisé en ce qu'**on choisit une durée de dépôt entre 5 secondes et 30 minutes.

13. Corps cru de SiO₂ avec des zones densifiées, préparé au moyen d'un procédé selon l'une quelconque des revendications 1 à 12, **caractérisé en ce qu'**il présente une densité de corps cru qui est jusqu'à 30% supérieure dans les zones densifiées par rapport au corps cru de départ non densifié.

14. Corps cru de SiO₂ présentant une densité de corps cru supérieure à 95%.

15. Corps crus de SiO₂, **caractérisés en ce qu'**ils présentent une zone post-densifiée par électrophorèse et qu'ils sont constitués dans cette zone par au moins 75% en volume de particules de SiO₂.

16. Corps cru de SiO₂ selon la revendication 15, **caractérisé en ce que** la densité dans la zone post-densifiée par électrophorèse est située entre 1,7 g/cm³ et 2,0 g/cm³.

17. Corps cru de SiO₂ selon l'une quelconque des revendications 13 à 16, **caractérisé en ce que** la profondeur d'imprégnation obtenue au moyen d'un procédé selon l'une quelconque des revendications 1 à 12 dans le corps cru de SiO₂ est située entre 1 µm et 10 mm.

18. Creuset en verre de quartz pour former des monocristaux de silicium, constitué par un corps façonné en verre de quartz, qui présente des zones à pores ouverts ainsi qu'à pores fermés, frittées à densité maximale, avec une vitrification imperméable aux gaz sur la face intérieure et une porosité sur la face extérieure.

19. Creuset en verre de quartz, selon la revendication 18, **caractérisé en ce que** les pores sur la face extérieure ne sont en moyenne pas supérieurs à 30 µm.
